(19) Europäisches Patentamt
European Patent Office
Office européen des brevets

(11) **EP 2 787 621 A1**

(12) **EUROPEAN PATENT APPLICATION**
published in accordance with Art. 153(4) EPC

(43) Date of publication:
**08.10.2014 Bulletin 2014/41**

(51) Int Cl.:
*H02M 5/297* ^(2006.01)        *H02M 5/293* ^(2006.01)

(21) Application number: **12854169.5**

(86) International application number:
**PCT/JP2012/078480**

(22) Date of filing: **02.11.2012**

(87) International publication number:
**WO 2013/080744 (06.06.2013 Gazette 2013/23)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.11.2011   JP 2011263037**

(71) Applicants:
• **Kabushiki Kaisha Yaskawa Denki**
  **Kitakyushu-shi, Fukuoka 806-0004 (JP)**
• **National University Corporation Nagaoka University**
  **Nagaoka-shi, Niigata 940-2188 (JP)**

(72) Inventors:
• **TANAKA, Takashi**
  **Kitakyushu-shi**
  **Fukuoka 806-0004 (JP)**

• **YAMAMOTO, Eiji**
  **Kitakyushu-shi**
  **Fukuoka 806-0004 (JP)**
• **ITOH, Jun-ichi**
  **Nagaoka-shi**
  **Niigata 940-2188 (JP)**
• **TAKAHASHI, Hiroki**
  **Nagaoka-shi**
  **Niigata 940-2188 (JP)**

(74) Representative: **Grünecker, Kinkeldey, Stockmair & Schwanhäusser**
  **Leopoldstrasse 4**
  **80802 München (DE)**

(54) **MATRIX CONVERTER**

(57)    A matrix converter according to an embodiment includes a power converter having a plurality of bidirectional switches, a controller configured to control the power converter, and a current detector configured to detect a current flowing to an output side of the power converter. The controller extracts a high-frequency component contained in the current detected by the current detector, adjusts an output current reference on the basis of the high-frequency component, and controls the power converter on the basis of the adjusted output current reference.

FIG.4A

**EP 2 787 621 A1**

## Description

Field

The embodiments disclosed herein relate to a matrix converter.

Background

As a power conversion device, a matrix converter is conventionally known that directly converts power from an alternating-current power supply into alternating-current power having any desired frequency and voltage. Such a matrix converter can regenerate power and control an input power factor, and thus draws attention as a new power conversion device.

The matrix converter includes switching elements such as semiconductor switches, and converts power by switching the switching elements. Thus, the switching causes harmonic noise. For this reason, conventional matrix converters have a filter disposed on the input side thereof (refer, for example, to Patent Literature 1).

Disposing the filter on the input side in this manner can produce a distortion of an input current caused by resonance of inductors and capacitors constituting the filter. Therefore, a matrix converter described in Non Patent Literature 1 performs damping control for suppression of the resonance at the same time as output current control.

Citation List

Patent Literature

Patent Literature 1: Japanese Patent Application Laid-open No. 2002-354815

Non Patent Literature

Non Patent Literature 1: Junnosuke Haruna and Junichi Ito, "A Consideration about Combination of Input / Output Control for a Matrix Converter using Generator and Motor," SPC-10-90, Technical Meeting on Semiconductor Power Converter, The Institute of Electrical Engineers of Japan, 2010

Summary

Technical Problem

However, the matrix converter described in Non Patent Literature 1 has a limited current response to a fundamental wave of the output current.

An aspect of the embodiments has been made in view of the above, and it is an object thereof to provide a matrix converter that can suppress the input current distortion caused by the resonance, without degrading the current responsivity to the fundamental wave of the output current.

Solution to Problem

A matrix converter according to an embodiment includes a power converter having a plurality of bidirectional switches, a controller configured to control the power converter, and a current detector configured to detect a current flowing to an output side of the power converter. The controller extracts a high-frequency component contained in the current detected by the current detector, adjusts an output current reference on the basis of the high-frequency component, and controls the power converter on the basis of the adjusted output current reference.

Advantageous Effects of Invention

According to an aspect of the embodiments, a matrix converter can be provided that can suppress the input current distortion caused by the resonance, without degrading the current responsivity to the fundamental wave of the output current.

Brief Description of Drawings

FIG. 1 is a diagram illustrating a configuration of a matrix converter according to a first embodiment of the present invention.

FIG. 2 is a diagram illustrating a configuration of a power conversion cell.

FIG. 3 is a diagram illustrating a configuration of a controller.

FIG. 4A is a diagram illustrating a configuration of a q-axis current controller.

FIG. 4B is a diagram illustrating a configuration of a d-axis current controller.

FIG. 5 is a diagram illustrating a configuration of a matrix converter according to a second embodiment of the present invention.

FIG. 6 is a diagram illustrating a configuration of a matrix converter according to a third embodiment of the present invention.

Description of Embodiments

Some embodiments of a matrix converter disclosed in the present application will be described below in detail with reference to the accompanying drawings. The embodiments given below do not limit the present invention.

First Embodiment

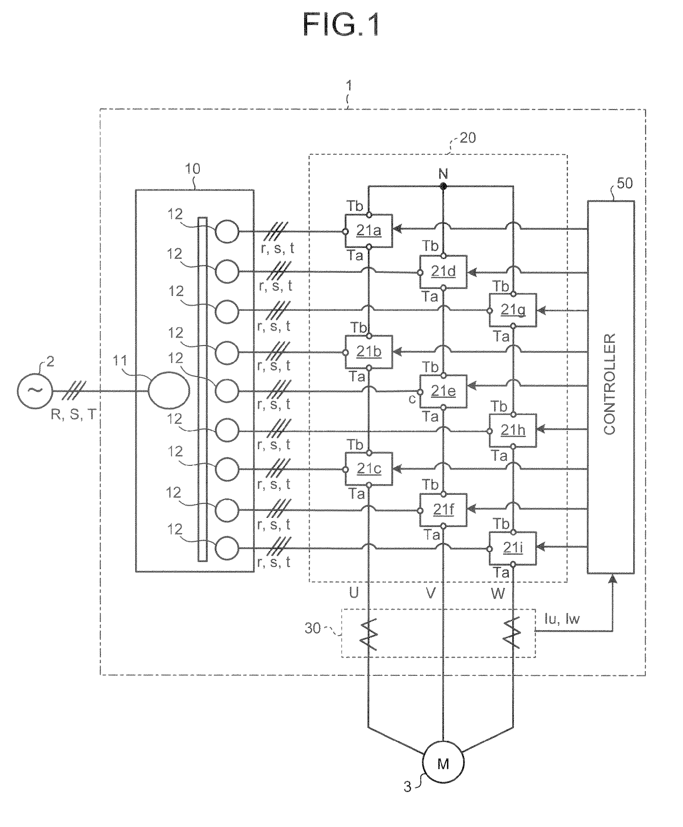

First, a configuration of a matrix converter according to a first embodiment of the present invention will be described with reference to FIG. 1. FIG. 1 is a diagram illustrating the configuration of the matrix converter according to the first embodiment. As illustrated in FIG. 1, this matrix converter 1 according to the first embodiment is provided between an alternating-current (AC) power supply 2 and a load 3.

The matrix converter 1 converts alternating-current (AC) power supplied from the AC power supply 2 into AC power having a predetermined voltage and frequency, and outputs the converted AC power to the load 3. For example, a power supply facility supplying a voltage transformed from an electric power system or an alternator can be used as the AC power supply 2, and, for example, an alternating-current (AC) motor can be used as the load 3. Hereinafter, as an example, the load 3 may be assumed to be an AC motor, and referred to as an AC motor 3. The matrix converter 1 can also perform the power conversion from the load 3 to the AC power supply 2, in addition to the power conversion from the AC power supply 2 to the load 3.

As illustrated in FIG. 1, the matrix converter 1 is provided between the AC power supply 2 and the load 3, and includes a multiple transformer 10, a power conversion block 20, a current detector 30, and a controller 50.

The multiple transformer 10 includes a primary winding 11 and a plurality of secondary windings 12. The primary winding 11 is connected to an R-phase, an S-phase, and a T-phase of the AC power supply 2. The secondary windings 12 are connected to respective power conversion cells 21a to 21i (corresponding to examples of unit single-phase power converters) of the power conversion block 20 (corresponding to an example of a power converter). In this way, the multiple transformer 10 distributes the three-phase AC power supplied to the primary winding 11 to the secondary windings 12 for respective phases on the side of the load 3. Each of the secondary windings 12 outputs power of an r-phase, an s-phase, and a t-phase obtained by adjusting voltages and phases of the power of the respective R-, S-, and T-phases supplied to the primary winding 11. The multiple transformer 10 is configured to insulate the power conversion cells 21a to 21i (hereinafter, may collectively be called power conversion cells 21), and to shift the phases of the voltages supplied to the respective power conversion cells 21 in steps of, for example, 20 degrees. This can reduce harmonics on the primary side of the multiple transformer 10.

The power conversion block 20 is formed by connecting a U-phase, a V-phase, and a W-phase having a phase difference of 120 degrees from each other in a Y-connection. Specifically, the power conversion block 20 includes the power conversion cells 21 (corresponding to the examples of the unit single-phase power converters), and the U-, V-, and W-phases are formed in multiple sets in each of which three of the power conversion cells 21 are connected in series. While each of the U-, V-, and W-phases is constituted by three of the power conversion cells 21, it may be constituted by two of the power conversion cells 21, or four or more of the power conversion cells 21.

The current detector 30 detects an output current. Specifically, the current detector 30 detects an instantaneous value Iu of a current (hereinafter, referred to as U-phase current value Iu) flowing between the power conversion block 20 and the U-phase of the load 3, and an instantaneous value Iw of a current (hereinafter, referred to as W-phase current value Iw) flowing between the power conversion block 20 and the W-phase of the load 3. For example, a current sensor that detects a current using a Hall element serving as a magneto-electric conversion element can be used as the current detector 30.

The controller 50 generates control signals including output voltage references Vu*, Vv*, and Vw*, and outputs the control signals to the power conversion cells 21. Specifically, the controller 50 outputs a control signal including the output voltage reference Vu* to each of the power conversion cells 21 constituting the U-phase, a control signal including the output voltage reference Vv* to each of the power conversion cells 21 constituting the V-phase, and a control signal including the output voltage reference Vw* to each of the power conversion cells 21 constituting the W-phase. This makes the power conversion cells 21 perform the power conversion operation on the basis of the control signals.

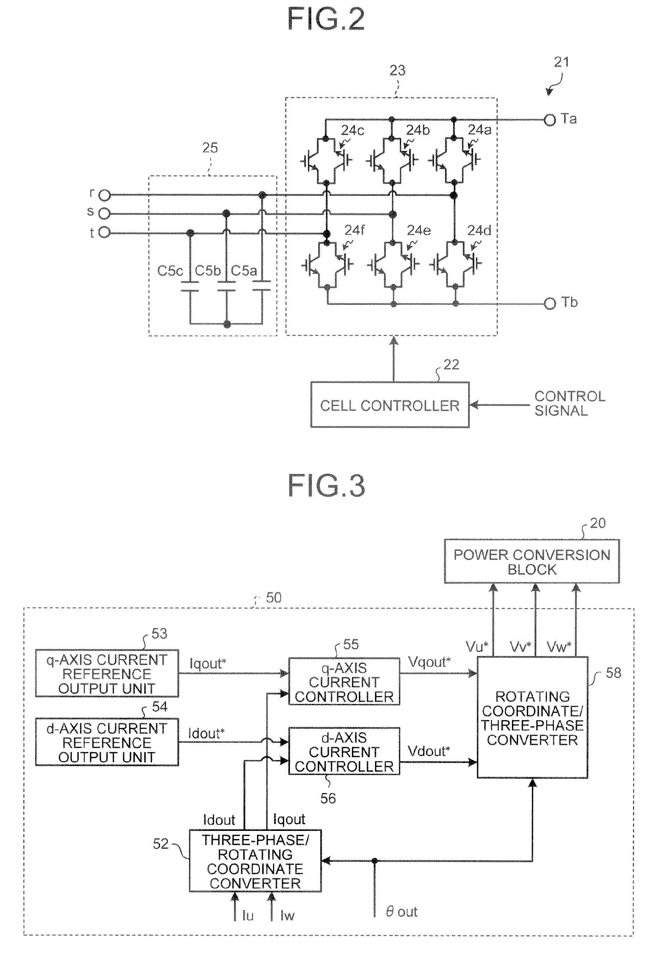

Next, a configuration of each of the power conversion cells 21 will be described with reference to FIG. 2. FIG. 2 is a diagram illustrating the configuration of the power conversion cell 21.

As illustrated in FIG. 2, the power conversion cell 21 includes a cell controller 22, a switching unit 23, and a capacitor block 25. The cell controller 22 controls the switching unit 23 on the basis of the control signals output from the controller 50, using a known PWM control method for the matrix converter. For example, the PWM control method determines a magnitude relation among the voltages of the r-, s-, and t-phases on the basis of the phases of respective input voltages, and on the basis of the magnitude relation, the voltage detection values, and the voltage references of the respective phases, determines on-times of bidirectional switches 24a to 24f (to be described later). For example, a detector for input voltages is omitted.

The switching unit 23 is also called a single-phase matrix converter, and performs the power conversion operation between each of the secondary windings 12 of the multiple transformer 10 and terminals Ta and Tb, under control of the cell controller 22. The switching unit 23 includes the bidirectional switches 24a to 24f (hereinafter, may collectively be called bidirectional switches 24). One end of each of the bidirectional switches 24a to 24c is connected to the terminal Ta of the switching unit 23, and one end of each of the bidirectional switches 24d to 24f is connected to the terminal Tb of the switching unit 23.

The other end of the bidirectional switch 24a is connected to the other end of the bidirectional switch 24d, and further connected to the r-phase of the secondary winding 12. In the same manner, the other end of the bidirectional switch 24b is connected to the other end of the bidirectional switch 24e, and further connected to the s-phase of the secondary winding 12. The other end of the bidirectional switch 24c is connected to the other end of the bidirectional switch 24f, and further connected to the t-phase of the secondary winding 12.

The bidirectional switches 24a to 24f can be constituted by two unidirectional switching elements connected in parallel in directions opposite to each other. For example, semiconductor switches such as insulated gate bipolar transistors (IGBTs) are used as the switching elements. The current flowing direction is controlled by supplying signals to the gates of the semiconductor switches and controlling the on/off of the semiconductor switches. Specifically, the cell controller 22 makes a desired input/output current flow by adjusting the timing of the on/off of the bidirectional switches 24.

The capacitor block 25 includes capacitors C5a to C5c. One end of each of the capacitors C5a to C5c is connected to the corresponding phase (r-, s-, or t-phase) of the secondary winding 12, and the other ends thereof are mutually connected. The capacitor block 25 and the multiple transformer 10 form a filter therebetween. Specifically, leakage inductance of the multiple transformer 10 and the capacitors C5a to C5c form an input filter.

Next, a configuration of the controller 50 will be described with reference to FIG. 3. FIG. 3 is a diagram illustrating the configuration of the controller 50.

As illustrated in FIG. 3, the controller 50 includes a three-phase/rotating coordinate converter 52, a q-axis current reference output unit 53, a d-axis current reference output unit 54, a q-axis current controller 55, a d-axis current controller 56, and a rotating coordinate/three-phase converter 58.

The three-phase/rotating coordinate converter 52 converts the three-phase output current flowing toward the load 3 into dq components of a d-q coordinate system, on the basis of the U-phase current value Iu and the W-phase current value Iw. Specifically, the three-phase/rotating coordinate converter 52 obtains a V-phase current value Iv from the U-phase current value Iu and the W-phase current value Iw, and after converting the current values Iu, Iv, and Iw into two-phase current values using a known three-phase/two-phase conversion method, converts the two-phase current values into dq components of two orthogonal axes in a coordinate system rotating corresponding to an output phase θout. This generates a q-axis output current value Iqout that is a current value in the q-axis direction, and a d-axis output current value Idout that is a current value in the d-axis direction. The output phase θout employs a value calculated on the basis of an integrated value of an output frequency reference (not illustrated) to the AC motor 3, or a value calculated on the basis of a value of a rotor position of the AC motor 3 obtained by detection using a detector (not illustrated) or by estimation. A known method can be used as a method for obtaining the output phase θout, and thus, detailed description thereof is omitted.

The q-axis current reference output unit 53 generates a q-axis output current reference Iqout*, and outputs it to the q-axis current controller 55. The q-axis output current reference Iqout* can be, for example, a target current value proportional to a torque commend to the AC motor 3. The d-axis current reference output unit 54 generates a d-axis output current reference Idout*, and outputs it to the d-axis current controller 56. The d-axis output current reference Idout* can be a target current value proportional to an excitation reference, or can be a zero current reference, depending on the type of the AC motor 3.

On the basis of the q-axis output current reference Iqout* output from the q-axis current reference output unit 53 and the q-axis output current value Iqout output from the three-phase/rotating coordinate converter 52, the q-axis current controller 55 generates a q-axis output voltage reference Vqout*. On the basis of the d-axis output current reference Idout* output from the d-axis current reference output unit 54 and the d-axis output current value Idout output from the three-phase/rotating coordinate converter 52, the d-axis current controller 56 generates a d-axis output voltage reference Vdout*.

The d-axis output voltage reference Vdout* and the q-axis output voltage reference Vqout* obtained in this manner are supplied to the rotating coordinate/three-phase converter 58. On the basis of the q-axis output voltage reference Vqout* output from a q-axis current controller 55 and the d-axis output voltage reference Vdout* output from the d-axis current controller 56, the rotating coordinate/three-phase converter 58 obtains an output voltage reference Va*. Specifically, the rotating coordinate/three-phase converter 58 obtains the output voltage reference Va* and an output phase reference θa*, for example, from Equations (1) and (2) below. Equations (1) and (2) below are only examples, and can be changed as appropriate.

$$\text{Output voltage reference Va}^* = (\text{Vdout}^{*2} + \text{Vqout}^{*2})^{1/2} \; \text{---} \; (1)$$

$$\text{Output phase reference } \theta a^* = \tan^{-1}(\text{Vqout}^*/\text{Vdout}^*) \; \text{---} \; (2)$$

The rotating coordinate/three-phase converter 58 adds the output phase θout to the output phase reference θa* to calculate an output phase reference θb. On the basis of the output voltage reference Va* and the output phase reference θb, the rotating coordinate/three-phase converter 58 obtains three-phase AC voltage references, that is, the output voltage references Vu*, Vv*, and Vw* for the respective phases of the load 3. Specifically, the rotating coordinate/three-phase converter 58 obtains the U-phase output voltage command Vu*, the V-phase output voltage reference Vv*, and the W-phase output voltage reference Vw*, for example, from Equations (3) to (5) below. The output voltage references Vu*, Vv*, and Vw* for the respective phases of the load 3 are output from the rotating coordinate/three-phase converter 58 to the power conversion block 20.

$$\text{Vu}^* = \text{Va}^* \times \sin(\theta b) \; \text{---} \; (3)$$

$$\text{Vv}^* = \text{Va}^* \times \sin(\theta b - (2\pi/3)) \; \text{---} \; (4)$$

$$\text{Vw}^* = \text{Va}^* \times \sin(\theta b + (2\pi/3)) \; \text{---} \; (5)$$

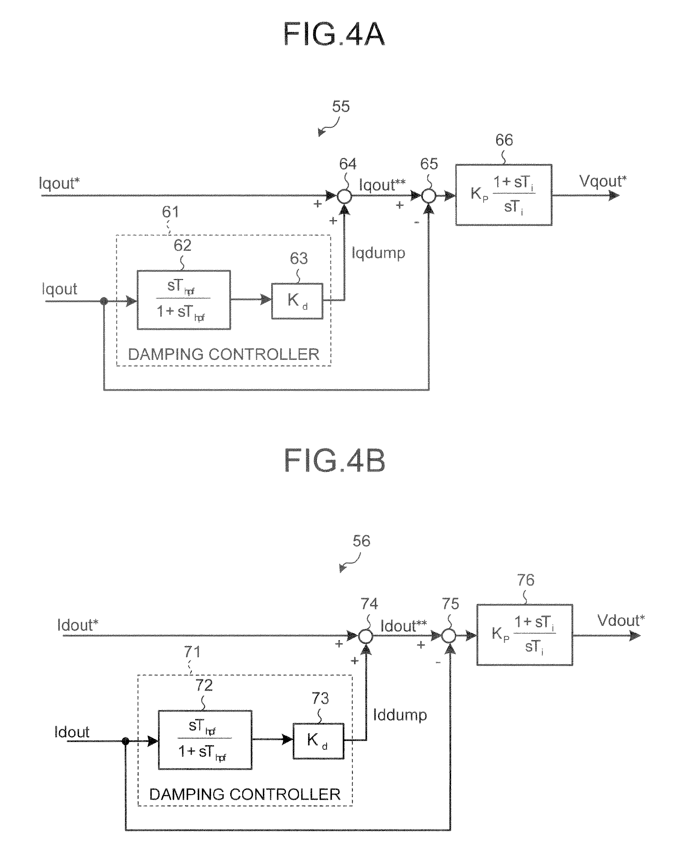

Next, configurations of the q-axis current controller 55 and the d-axis current controller 56 will be described with reference to FIGS. 4A and 4B. FIG. 4A is a diagram illustrating the configuration of the q-axis current controller 55 according to the first embodiment, and FIG. 4B is a diagram illustrating the configuration of the d-axis current controller 56 according to the first embodiment.

As illustrated in FIG. 4A, the q-axis current controller 55 includes a damping controller 61, an adder 64, a subtractor 65, and a PI controller 66. On the basis of the q-axis output current reference Iqout* and the q-axis output current value Iqout, the q-axis current controller 55 generates the q-axis output voltage reference Vqout* to which damping control has been applied.

The damping controller 61 performs the damping control. The damping controller 61 includes a high-pass filter 62 and a proportional calculator 63. The high-pass filter 62 filters out a low-frequency component from the q-axis output current value Iqout supplied from the three-phase/rotating coordinate converter 52 so as to extract a high-frequency component of the q-axis current caused by resonance.

The q-axis output current value Iqout output from the three-phase/rotating coordinate converter 52 has been generated by rotating coordinate conversion on the basis of the output phase θout. Therefore, in the q-axis output current value Iqout, the fundamental wave component of the output current appears as a direct-current component, and the high-frequency component caused by the resonance appears as a ripple component superimposed on the direct-current component. The high-pass filter 62 extracts the high-frequency component of the q-axis current by separating the ripple component from the q-axis output current value Iqout.

The proportional calculator 63 multiplies the high-frequency component of the q-axis current by a damping gain Kd (corresponding to an example of a predetermined coefficient) extracted by the high-pass filter 62, and outputs the multiplication result as a damping control amount Iqdump to the adder 64. In general, when a resonance phenomenon occurs in an input-side filter during constant-power loading, equivalent negative resistance appears between a voltage variation amount and a current variation amount on the input side. The damping gain Kd is set, for example, larger than 1/Rm where Rm is the equivalent negative resistance. This can make the damping control amount Iqdump have a value that offsets the equivalent negative resistance in the sense of control, and thus suppresses the resonance. Applying the damping control to the input-side current can also offset the equivalent negative resistance on the input side. However, because the matrix converter 1 is a power conversion device that directly converts the input power into the output power by equalizing the input and output instantaneous power, the damping controller 61 can be arranged that applies the damping control to the output-side current as described above.

The adder 64 adds the damping control amount Iqdump output from the proportional calculator 63 to the q-axis output current reference Iqout* output from the q-axis current reference output unit 53, and thus generates a q-axis output current reference Iqout**. The subtractor 65 calculates a deviation between the q-axis output current reference Iqout** output from the adder 64 and the q-axis output current value Iqout, and outputs the calculation result to the PI controller 66. The PI controller 66 applies proportional-integral (PI) control to the deviation between the q-axis output current reference Iqout** and the q-axis output current value Iqout, and thus generates and outputs the q-axis output voltage reference Vqout*.

In this manner, the q-axis current controller 55 calculates the damping control amount Iqdump on the basis of the high-frequency component contained in the q-axis current, and adjusts the q-axis output current reference Iqout* on the basis of the damping control amount Iqdump. Then, the q-axis current controller 55 applies the PI control to the q-axis output current reference Iqout** after the adjustment so as to generate and output the q-axis output voltage reference Vqout*. Because the configuration is not such that a low-pass filter is connected in series to a PI controller, a distortion of the input current from the AC power supply 2 caused by the resonance can be suppressed without degradation in the current responsivity to the fundamental wave of the output current.

The d-axis current controller 56 has the same configuration as that of the q-axis current controller 55. Specifically, as illustrated in FIG. 4B, the d-axis current controller 56 includes a damping controller 71, an adder 74, a subtractor 75, and a PI controller 76. Further, the damping controller 71 includes a high-pass filter 72 and a proportional calculator 73. In the d-axis current controller 56, the high-pass filter 72 and the proportional calculator 73 of the damping controller 71 generate a damping control amount Iddump on the basis of the d-axis output current value Idout, and the adder 74 adds the damping control amount Iddump to the d-axis output current reference Idout*. The PI controller 76 applies the PI control to a d-axis output current reference Idout** after being adjusted so as to generate and output the d-axis output voltage reference Vdout*.

As described above, the matrix converter 1 according to the first embodiment calculates the damping control amounts on the basis of the high-frequency components contained in the output currents, and adjusts the output current references on the basis of the damping control amounts. This can implement the output current control and the damping control at the same time, without degrading the current responsivity to the fundamental waves of the output currents.

The matrix converter 1 is what is called a series multiple matrix converter, in which the leakage inductance of the multiple transformer 10 is used as an input filter. Therefore, no damping resistor can be connected in parallel with the leakage inductance of the multiple transformer 10. However, as described above, applying the damping control can suppress the distortion of the input current from the AC power supply 2 caused by the resonance.

Because the matrix converter 1 performs the damping control on the output side, the gain adjustment of the input/output control is not complicated, and the damping control can be performed independent of the number of the power conversion cells 21.

Second Embodiment

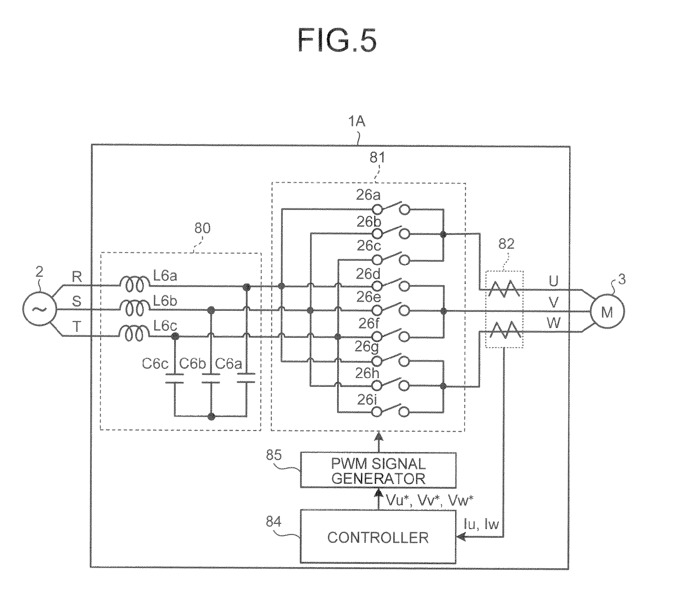

Next, a matrix converter according to a second embodiment of the present invention will be described. FIG. 5 is a diagram illustrating a configuration of the matrix converter according to the second embodiment. Components corresponding to the components of the above-described first embodiment will be given the same symbols, and description duplicate with that of the first embodiment will be omitted as appropriate.

As illustrated in FIG. 5, this matrix converter 1A according to the second embodiment includes an input filter 80, a switching unit 81, a current detector 82, a controller 84, and a PWM signal generator 85, and performs the power conversion between the AC power supply 2 and the load 3.

The input filter 80 suppresses the harmonic noise caused by the switching by the switching unit 81. The input filter 80 includes inductors L6a to L6c disposed between the respective phases (R-, S-, and T-phases) of the AC power supply 2 and the switching unit 81, and capacitors C6a to C6c that are each connected at one end thereof to the corresponding phase of the AC power supply 2 and are mutually connected at the other ends thereof.

The switching unit 81 is a power converter having a plurality of bidirectional switches 26a to 26i, each of which connects the AC power supply 2 to the load 3. Specifically, the bidirectional switches 26a, 26d, and 26g connect the R-phase of the AC power supply 2 to the respective phases (U-, V-, and W-phases) of the load 3.
The bidirectional switches 26b, 26e, and 26h connect the S-phase of the AC power supply 2 to the respective phases of the load 3. The bidirectional switches 26c, 26f, and 26i connect the T-phase of the AC power supply 2 to the respective phases of the load 3. The bidirectional switches 26a to 26i have the same configuration as that of the bidirectional switches 24.

The current detector 82 has the same configuration as that of the current detector 30, and detects the U-phase current value Iu and the W-phase current value Iw.

On the basis of the U-phase current value Iu and the W-phase current value Iw, the controller 84 obtains the output voltage references Vu*, Vv*, and Vw* for the respective phases of the load 3, and outputs them to the PWM signal generator 85. On the basis of the output voltage references Vu*, Vv*, and Vw*, the PWM signal generator 85 generates a PWM signal for controlling the bidirectional switches 26a to 26i, and performs the input/output control using the PWM signal. Methods for the PWM control are known, and, for example, the above-described PWM control method is used.

The controller 84 has the same configuration as that of the controller 50 (refer to FIG. 3), and performs the output current control and the damping control at the same time to suppress the input current distortion caused by the resonance. In other words, the controller 84 calculates the damping control amounts on the basis of the high-frequency components contained in the output currents, and adjusts the output current references on the basis of the damping control amounts. Thereafter, the controller 84 applies the PI control to the output current references after being adjusted so as to generate and output the output voltage references.

Thus, the matrix converter 1A does not have a configuration in which a low-pass filter is connected in series to a PI controller, and therefore can suppress the input current distortion caused by the resonance, without degrading the current responsivity to the fundamental waves of the output currents.

As described above, the matrix converter 1A according to the second embodiment has the bidirectional switches 26a to 26i connecting the U-, V-, and W-phases of the load 3 to the phases of the AC power supply 2. The matrix converter 1A having such a configuration can also suppress the distortion of the input current from the AC power supply 2 caused by the resonance, in the same manner as in the case of the matrix converter 1 according to the first embodiment.

Third Embodiment

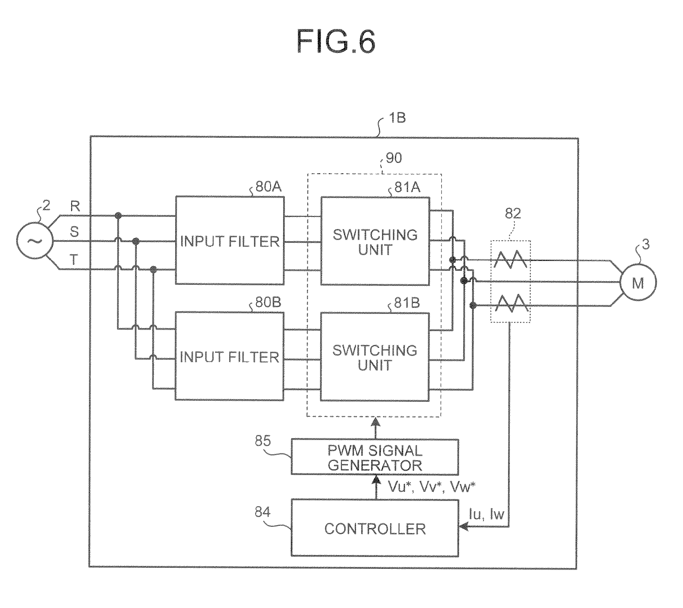

Next, a matrix converter according to a third embodiment of the present invention will be described. FIG. 6 is a diagram illustrating a configuration of the matrix converter according to the third embodiment. Components corresponding to the components of the first or the second embodiment described above will be given the same symbols, and description duplicate with that of the first or the second embodiment will be omitted as appropriate.

As illustrated in FIG. 6, this matrix converter 1B according to the third embodiment is a parallel multiple matrix converter. The matrix converter 1B includes a power converter 90 having a plurality of switching units 81A and 81B (corresponding to examples of unit power converters). On the input side of the power converter 90, input filters 80A and 80B are individually provided for the switching units 81A and 81B, respectively. The input filters 80A and 80B have the same configuration as that of the input filter 80 according to the second embodiment. To suppress a circulating current caused by a difference between output voltages of power converters connected in parallel in a parallel multiple power conversion device, reactors are installed at the output sides of the power converters. However, the present embodiment has a configuration in which the reactors (inductors L6a to L6c) of the input filters 80A and 80B serve as substitutes for the reactors. Each of the switching units 81A and 81B has the same configuration as that of the switching unit 81 according to the second embodiment, and is controlled by a PWM signal output from the PWM signal generator 85.

The PWM signals supplied from the PWM signal generator 85 to the respective switching units 81A and 81B can be, but not limited to be, the same signals. For example, a current flowing through the switching unit 81A and the load 3 and a current flowing through the switching unit 81B and the load 3 can be detected, and taking into account the difference between the currents, the PWM signals can be individually generated for the switching units 81A and 81B. This can balance the current flowing between the switching unit 81A and the load 3 with the current flowing between the switching unit 81B and the load 3. In this case, each of the U-phase current value Iu and the W-phase current value Iw in FIG. 6 only needs to be a value obtained by adding the current flowing between the switching unit 81A and the load 3 to the current flowing between the switching unit 81B and the load 3, for each of the U-phase and the W-phase, respectively.

In the same manner as in the above-described cases of the matrix converters 1 and 1A according to the first and the second embodiments, the matrix converter 1B according to the third embodiment does not have a configuration in which a low-pass filter is connected in series to a PI controller, and thus can suppress the distortion of the input current from the AC power supply 2 caused by the resonance without degrading the current responsivity to the fundamental waves of the output currents.

While, in the third embodiment, the input filters 80A and 80B are individually provided for the switching units 81A and 81B, respectively, as described above, the present invention is not limited to this configuration. The present invention may have a configuration in which the output currents are balanced by one common input filter provided for the switching units 81A and 81B, and reactors individually provided on the output sides of the switching units 81A and 81B.

Further effects and modifications can easily be derived by those skilled in the art. Consequently, a broader aspect of the present invention is not limited to the specific detailed and representative embodiments illustrated and described above. Accordingly, various modifications can be made without departing from the spirit or the scope of the concept of the invention defined by the appended claims and the equivalents thereof.

For example, the method of generating the d-axis output voltage reference Vdout* and the q-axis output voltage reference Vqout* is not limited to the generation method of the embodiments describe above. For example, the d-axis output voltage reference Vdout* may be obtained by adding an interference (induced) voltage calculated on the basis of the q-axis output current reference Iqout** or the q-axis output current Iqout, and on the output frequency reference, to the output of the d-axis current controller 56. The q-axis output voltage reference Vqout* may be obtained by adding an interference (induced) voltage calculated on the basis of the d-axis output current reference value Idout** or the d-axis output current Idout, and on the output frequency reference, to the output of the q-axis current controller 55.

While the above-described embodiments have illustrated the examples of the series multiple matrix converter and the parallel multiple matrix converter as a matrix converter having a plurality of switching units, the matrix converter is not limited to these examples. For example, configuring the controller in the same manner allows a series/parallel multiple matrix converter to suppress the input current distortion caused by the resonance, without degrading the current responsivity to the fundamental waves of the output currents.

Reference Signs List

| | |
|---|---|
| 1, 1A, 1B | Matrix converter |
| 10 | Multiple transformer |
| 20 | Power conversion block |
| 21a to 21i | Power conversion cell |
| 23, 81, 81A, 81B | Switching unit |
| 25 | Capacitor block |
| 30, 82 | Current detector |
| 50, 84 | Controller |
| 62, 72 | High-pass filter |
| 63, 73 | Proportional calculator |
| 64, 74 | Adder |
| 80, 80A, 80B | Input filter |
| 85 | PWM signal generator |

**Claims**

1. A matrix converter comprising:

   a power converter including a plurality of bidirectional switches;
   a controller configured to control the power converter; and
   a current detector configured to detect a current flowing to an output side of the power converter, wherein
   the controller extracts a high-frequency component contained in the current detected by the current detector, adjusts an output current reference on the basis of the high-frequency component, and controls the power converter on the basis of the adjusted output current reference.

2. The matrix converter according to claim 1, wherein the controller comprises:

   a high-pass filter configured to extract the high-frequency component contained in the current detected by the current detector;

a calculator configured to multiply an output of the high-pass filter by a certain coefficient; and
an adder configured to add the output of the calculator to the output current reference to adjust the output current reference.

3. The matrix converter according to claim 1 or 2, wherein the power converter comprises a plurality of unit single-phase power converters whose outputs constituting respective phases of the output are connected in series.

4. The matrix converter according to claim 1 or 2, wherein the power converter comprises a plurality of unit power converters connected in parallel to each other.

# FIG.1

# FIG.2

# FIG.3

# FIG.4A

# FIG.4B

# FIG.5

# FIG.6

**INTERNATIONAL SEARCH REPORT**

| International application No. |
|---|
| PCT/JP2012/078480 |

A. CLASSIFICATION OF SUBJECT MATTER
*H02M5/297(2006.01)i, H02M5/293(2006.01)i*

According to International Patent Classification (IPC) or to both national classification and IPC

B. FIELDS SEARCHED

Minimum documentation searched (classification system followed by classification symbols)
H02M5/297, H02M5/293

Documentation searched other than minimum documentation to the extent that such documents are included in the fields searched
Jitsuyo Shinan Koho          1922-1996   Jitsuyo Shinan Toroku Koho    1996-2013
Kokai Jitsuyo Shinan Koho    1971-2013   Toroku Jitsuyo Shinan Koho    1994-2013

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X Y | JP 2008-43154 A (Fuji Electric FA Components & Systems Co., Ltd.), 21 February 2008 (21.02.2008), claim 1; fig. 1 to 2 & US 2008/0055955 A1  & DE 102007033863 A1 & CN 101197542 A | 1-2 3-4 |
| Y | JP 2007-318847 A (Meidensha Corp.), 06 December 2007 (06.12.2007), paragraph [0004] & EP 2051361 A1       & WO 2007/135968 A1 & CN 101461123 A       & RU 2379817 C1 | 3 |

| ☒ | Further documents are listed in the continuation of Box C. | ☐ | See patent family annex. |

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search    15 January, 2013 (15.01.13) | Date of mailing of the international search report    22 January, 2013 (22.01.13) |
|---|---|
| Name and mailing address of the ISA/    Japanese Patent Office | Authorized officer |
| Facsimile No. | Telephone No. |

Form PCT/ISA/210 (second sheet) (July 2009)

## INTERNATIONAL SEARCH REPORT

International application No.

PCT/JP2012/078480

C (Continuation).    DOCUMENTS CONSIDERED TO BE RELEVANT

| Category* | Citation of document, with indication, where appropriate, of the relevant passages | Relevant to claim No. |
|---|---|---|
| Y | WO 2006/035752 A1 (Yaskawa Electric Corp.), 06 April 2006 (06.04.2006), paragraph [0002] & US 2008/0315819 A1   & US 7626840 B2 & KR 10-2007-0057869 A  & CN 101027831 A | 4 |

Form PCT/ISA/210 (continuation of second sheet) (July 2009)

**EP 2 787 621 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2002354815 A

### Non-patent literature cited in the description

- A Consideration about Combination of Input / Output Control for a Matrix Converter using Generator and Motor. **JUNNOSUKE HARUNA ; JUNICHI ITO.** SPC-10-90, Technical Meeting on Semiconductor Power Converter. The Institute of Electrical Engineers of Japan, 2010